# EUROPÄISCHE PATENTANMELDUNG

(11) **EP 2 742 988 A1**
(43) Veröffentlichungstag der Anmeldung: **18.06.2014**
(21) Anmeldenummer: 12196509.9
(22) Anmeldetag: 11.12.2012
(51) Int. Cl.: B01D 53/14, B01D 53/96, B01D 53/62

(54) **Aufreinigung eines Aminosäuresalz-basierten Waschmittels zur CO2 Abtrennung**

(71) Anmelder: Siemens Aktiengesellschaft, 80333 München (DE)
(72) Erfinder: Fischer, Björn, 60318 Frankfurt a.M. (DE); Hauke, Stefan, 64683 Einhausen (DE); Joh, Ralph, 63500 Seligenstadt (DE); Kinzl, Markus, 63128 Dietzenbach (DE); Schneider, Rüdiger, 65817 Eppstein (DE)

(57) **Zusammenfassung**

Die Erfindung betrifft ein Verfahren zur anlagentechnischen Aufbereitung einer mit Rauchgasbestandteilen (11) verunreinigten Aminosäuresalzlösung als Waschlösung (10), umfassend die folgenden einander nachfolgenden Verfahrensschritte:
- Einleiten von CO₂ (12) in eine wässrige Aminosäuresalzlösung (10) und Ausfällen von Aminosäure, Hydrogencarbonat und/oder Aminosäurecarbamat;
- Abscheiden der gebildeten Kristalle derart, dass ein Kristallkuchen mit Resten an verbleibender Mutterlauge (21) vorliegt;
- Verdrängen dieser verbleibenden Mutterlauge (21) durch Behandeln des Kristallkuchens mit einem geeigneten Verdrängungsmedium (30);

## Beschreibung

Die Erfindung betrifft ein Verfahren zur anlagentechnischen Aufbereitung einer mit Rauchgas verunreinigten Aminosäuresalzlösung als Waschlösung sowie eine technische Anlage zur Ausführung eines solchen Verfahrens.

Bei großtechnischen Anlagen, wie etwa Kraftwerksanlagen, wird zur Erzeugung von Energie durch Verbrennung eines typischerweise fossilen Brennstoffes Kohlendioxid-haltiges Rauchgas erzeugt. Das Rauchgas wird im Normalfall der Umgebungsluft zugeführt, wobei das darin enthaltene Kohlendioxid zu einer Verstärkung des atmosphärischen Treibhauseffektes beitragen kann. Zur Abtrennung des Kohlendioxids aus dem Rauchgas sind verschiedene Methoden bekannt. Darunter sind bspw. zu nennen: Precombustion-Abtrennung, Oxyfuel-Verfahren wie auch eine Postcombustion-Abtrennung. Bei letzterem Verfahren ist zunächst die Absorption des Kohlendioxids aus dem Rauchgas durch eine geeignete Waschlösung vorgesehen, wobei die mit Kohlendioxid beladene Waschlösung in einem nachfolgenden Desorptionsverfahren wieder regeneriert wird. Durch die Regeneration wird die effektive Waschsubstanz in der Waschlösung wieder zurück gewonnen, und kann erneut der Postcombustion-Abtrennung zur Verfügung gestellt werden.

Die im Rahmen einer solchen Postcombustion-Abtrennung eingesetzten effektiven Waschsubstanzen zeigen typischerweise eine gute Selektivität und eine verhältnismäßig hohe Aufnahmefähigkeit für Kohlendioxid. Besonders gut eignen sich insbesondere Amine als effektive Waschsubstanzen, wie etwa Monoethanolamin.

Aufgrund der Lösung der Rauchgasbestandteile in der Waschlösung werden neben dem bevorzugt zu absorbierenden Kohlendioxid auch eine große Menge an Verunreinigungen aus dem Rauchgas in die Waschlösung überführt, die zu einer über die Zeit ansteigenden Degradation der Waschlösung führen. Neben diesen Rauchgas-Nebenprodukten kann die Waschlösung zusätzlich auch durch die thermische Beanspruchung während der Postcombustion-Abtrennung degradiert werden. Um dieser Degradation entgegen zu wirken, wird typischerweise die Waschlösung bzw. die effektive Waschsubstanz darin kontinuierlich ersetzt. Bei dieser Ersetzung wird neben den Verunreinigungen sowie den Degradationsprodukten auch immer in unerwünschter Weise eine Menge an noch nicht verbrauchter Waschlösung verworfen und steht folglich für die weitere Rauchgaswäsche nicht mehr zur Verfügung.

Bei aus dem Stand der Technik bekannten Aminwäschen können die Amine, die die effektiven Waschsubstanzen bilden, durch geeignete Destillation zurück gewonnen werden. Bei Aminosäuresalzlösungen ist dies jedoch wegen des geringen Dampfdrucks im Vergleich zu Aminlösungen nicht möglich, so dass zur Reinigung solcher Waschlösungen andere Verfahren angewandt werden müssen. Ein geeignetes Verfahren zum Reinigen solcher Aminosäuresalzlösungen ist bspw. in der EP 2 409 755 A1 beschrieben. Das Regenerationsverfahren der EP 2 409 755 A1 dient der Wiedergewinnung der Aminosäuresalze als effektive Waschsubstanzen und basiert auf einer selektiven Abscheidung durch Kristallisation und nachfolgender Wiedereinspeisung in gelöster Form in das Absorptionsverfahren zur Rauchgaswäsche.

Um die Aminosäuresalze als effektive Waschsubstanzen im Rahmen eines solchen Regenerationsverfahrens zu reinigen, wird der Umstand ausgenutzt, dass die Löslichkeit der Aminosäuresalze vom pH-Wert der umgebenden Lösung abhängig ist. Insbesondere steigt die Löslichkeit solcher Aminosäuresalze bei einem pH-Wert von 10 bis 13 signifikant an. Die Aminosäuresalze liegen deshalb in diesem pH-Bereich bevorzugt als Carboxylat vor.

Um eine selektive Kristallisation der Aminosäuresalze zu erreichen, ist eine Senkung des pH-Wertes der Lösung unter diesen Wertebereich von 10 bis 13 zu erreichen. Insbesondere zeigen die Aminosäuresalze die geringste Löslichkeit in der Nähe des so genannten isoelektrischen Punktes. Der isoelektrische Punkt zeichnet sich gleichzeitig dadurch aus, dass die Aminosäuresalze als Carboxylationen wie auch als Ammoniumionen miteinander im Gleichgewicht vorliegen. Um eine pH-Senkung zu erreichen, erweist sich die Zugabe und Lösung von saurem Kohlendioxid in die Waschlösung als besonders vorteilhaft, da Kohlendioxid die bevorzugt aus dem Rauchgas abzuscheidende Substanz ist. Zudem lässt sich das Kohlendioxid selektiv wieder aus der Waschlösung entfernen, indem etwa die Waschlösung thermisch behandelt wird. Gleichzeitig gewinnt die Waschlösung damit wieder eine höhere Alkalität.

Durch die Zugabe von Kohlendioxid in die Waschlösung mit Aminosäuresalzen wird das Kohlendioxid gelöst und dient aufgrund seines sauren Lösungsverhaltens zur Verminderung des pH-Werts. Das Kohlendioxid kann hierbei vorteilhaft dem gasförmigen Kohldioxid entnommen werden, welches in dem Desorptionsverfahren der Postcombustion-Abtrennung frei gesetzt wird. Dabei kann die zugrunde liegende Aminosäure und Hydrogencarbonat oder das entsprechende Aminosäurecarbamat gezielt auskristallisiert werden, wobei die in der verbleibenden Lösung (Mutterlauge) noch befindlichen Verunreinigungen abgetrennt und verworfen werden können. Nach Abtrennung der Verunreinigungen können die gewonnen Kristalle erneut in Wasser aufgelöst und als Waschlösung eingesetzt werden.

Die Aufreinigung der Kristalle, das heißt die Abtrennung der Verunreinigungen, stellt sich jedoch als kompliziert dar und führt zu einem verhältnismäßig hohen Verlust an Ausbeute. So hat es sich nämlich gezeigt, dass eine ausreichende Trennung von Mutterlauge und Kristallrückstand in einem technischen Maßstab nicht möglich ist. Zwar erlauben herkömmliche Filtrationsverfahren eine Aufreinigung der gebildeten Feststoffe zu einem Kristallkuchen, welcher jedoch noch etwa 20 Vol.-% oder mehr an Mutterlauge aufweist. Dieser Verbleib der Mutterlauge in dem Kristallkuchen bewirkt jedoch eine unerwünschte Verunreinigung der nachfolgend mit diesem Kristallkuchen wieder hergestellten Waschlösung. Da die Aufreinigung der ausgefällten Kristalle wiederholt in dem technischen Prozess erfolgen soll, nimmt somit die Menge an Verunreinigungen in der Waschlösung in unerwünschter Weise zu.

Die Zunahme dieser Verunreinigungen bewirkt jedoch eine Degradation der Waschlösung, die mit hohen wirtschaftlichen Kosten wie auch unerwünscht kurzen Wartungsintervallen bzw. unwirtschaftlich großen Mengen an aufzureinigendem Kristallkuchen einhergeht. Zudem kann die Abtrenneffizienz für Kohlendioxid aus dem Rauchgas nicht gleichbleibend gewährleistet werden.

Gemäß dieser aus dem Stand der Technik bekannten Nachteile stellt es sich als technisch erforderlich dar, ein verbessertes Aufreinigungsverfahren anzugeben, welches die Reinigung derartiger Aminosäuresalzlösungen als Waschlösungen verbessert und folglich eine höhere Ausbeute an gereinigten Aminosäuresalzen ermöglicht.

Diese der Erfindung zugrunde liegende Aufgabe wird durch ein Verfahren zur anlagentechnischen Aufbereitung einer mit Rauchgas verunreinigten Aminosäuresalzlösung als Waschlösung gemäß Anspruch 1 sowie durch eine technische Anlage zur Aufbereitung einer solchen Aminosäuresalzlösung gemäß Anspruch 12 gelöst.

Insbesondere wird die der Erfindung zugrunde liegende Aufgabe durch ein Verfahren zur anlagentechnischen Aufbereitung einer durch Rauchgasbestandteile verunreinigten Aminosäuresalzlösung als Waschlösung gelöst, welches die folgenden einander nachfolgenden Verfahrensschritte umfasst:
- Einleiten von CO₂ in eine wässrige Aminosäuresalzlösung und Ausfällen von Aminosäure und Hydrogencarbonat oder entsprechendem Aminosäurecarbamat aus der Lösung; die Ausfällung erfolgt hierbei insbesondere in Form von Kristallen. Die wässrige Aminosäuresalzlösung ist insbesondere eine mit CO₂ beladene wässrige Aminosäuresalzlösung.
- Abscheiden von gebildeten Kristallen derart, dass ein Kristallkuchen mit verbleibenden Resten an Mutterlauge vorliegt; gebildete Kristalle sind hierbei identisch mit ausgefällten Kristallen aus der wässrigen Aminosäuresalzlösung;
- Verdrängen von verbleibender Mutterlauge durch Behandeln des Kristallkuchens mit einem geeigneten Verdrängungsmedium.

Weiter wird die der Erfindung zugrunde liegende Aufgabe durch eine technische Anlage zur Aufbereitung einer mit Rauchgas aus einer Verbrennung verunreinigten wässrigen Aminosäuresalzlösung als Waschlösung gelöst, welche folgende Bauteile umfasst:
- eine Aufbereitungseinheit, in welcher CO₂ zu einer wenigstens ein Aminosäuresalz in gelöster Form enthaltenden wässrigen Waschlösung zugegeben werden kann, wobei Aminosäure, Hydrogencarbonat und/oder Aminosäurecarbamat ausfallen können;
- eine Abscheidungseinheit zum Abscheiden von gebildeten Kristallen, wobei die Kristalle in einer verbleibenden Mutterlauge als Kristallkuchen vorliegen;
- Verdrängungseinrichtung zum Verdrängen verbleibender Mutterlauge aus dem gewonnenen Kristallkuchen durch Behandeln des Kristallkuchens mit einem geeigneten Verdrängungsmedium.

Erfindungsgemäß betreffen die anlagentechnische Aufbereitung sowie die technische Anlage prozesstechnische Anlagen in einem Kraftwerks- bzw. in einem Industrieumfeld. Tischversuchsanlagen bzw. Laborversuchsanlagen sollen von vorliegender Erfindung nicht mit umfasst sein. Insbesondere aufgrund des großtechnischen Einsatzes der anlagentechnischen Aufbereitung werden an die Erfindung andere Anforderungen gestellt als etwa an eine Laborversuchsanlage.

An dieser Stelle sei darauf hingewiesen, dass eine Verunreinigung der Aminosäuresalzlösung im erfindungsgemäßen Sinn durch Restbestandteile des Rauchgases nicht als "unbeabsichtigte" Lösung dieser Bestandteile verstanden werden soll, sondern als eine Lösung mit unerwünschten Nebenprodukten, die in der Waschlösung zwangsläufig aufgrund der technischen Gegebenheiten vorliegen.

Weiterhin ist darauf hinzuweisen, dass die einander nachfolgenden Verfahrensschritte des erfindungsgemäßen Verfahrens nicht unmittelbar aufeinander nachfolgen müssen, sondern lediglich in zeitlicher Folge zueinander angeordnet sein sollen. Eine mittelbare Nachfolge ist also auch im Sinne der Erfindung möglich.

Das Abscheiden der gebildeten Kristalle in der Abscheidungseinheit kann mittels herkömmlicher Filtrierung erfolgen. Das Abscheiden der Kristalle entspricht jedoch keiner trockenen Abscheidung, bei welcher etwa nur Aminosäure, Hydrogencarbonat und/oder Aminosäurecarbamat zurückbleibt, sondern entspricht eine nassen Abscheidung, bei welcher in den Kristallen, vor allem aber in den Poren des gewonnenen Kristallkuchens Mutterlauge verbleibt. Die Mutterlauge entspricht hierbei der Waschlösung, aus welcher die Kristalle ausgefällt wurden. Sie enthält insbesondere noch die Verunreinigungen der Rauchgasbestandteile (=Rauchgas) als Nebenprodukt, von welchen die Aminosäuresalzlösung gereinigt werden sollen. Vor allem sind hier Schwefelverbindungen, Degradationsprodukte der Aminosäuresalze und gelöste Schwermetalle als Nebenprodukte zu erwähnen.

Das Ausfällen von Aminosäure, Hydrogencarbonat und/oder Aminosäurecarbamat kann ausführungsgemäß gleichzeitig oder auch zeitlich versetzt in einer Aufbereitungseinheit zur Zuführung des CO₂ in die Waschlösung oder auch in separaten Behältern erfolgen. Die Aufbereitungseinheit kann dabei mitunter auch identisch mit einem Reaktor sein, in welchem Rauchgas mittels einer Waschlösung abgeschieden wird.

Erfindungsgemäß ist eine Aufreinigung der aus der Mutterlauge abgeschiedenen Kristalle im einfachsten Fall durch eine Verdrängungsreinigung mittels Wasser vorgesehen. Hierbei wird die Mischung von verbleibender Mutterlauge und Kristallen als Kristallkuchen soweit mit Wasser behandelt, dass die noch verbleibende Mutterlauge in den Kristallen bzw. zwischen den Kristallen durch Wasser ersetzt wird. Durch diese Form der Aufreinigung kann der Gehalt an verbleibender Mutterlauge in dem Kristallkuchen auf Werte von 5 bis 10 Vol.-% oder auch kleiner vermindert werden.

Alternativ kann auch nicht verunreinigte, insbesondere frische Aminosäuresalzlösung als Verdrängungsmedium eingesetzt werden. Diese muss ohnehin als Ersatz für den Verlust an Waschlösung dem Waschprozess erneut zugeführt werden.

Gleichzeitig werden die so gereinigten Kristalle des Kristallkuchens jedoch durch die Zugabe von Verdrängungsmedium auch teilweise gelöst. Durch diesen Lösungsvorgang wird das im Kristallkuchen befindliche Wertprodukt herausgelöst und so hinsichtlich seiner Menge vermindert. Die Verwendung von frischer Waschlösung verringert das unerwünschte Auflösen des Filterkuchens im Vergleich zu Wasser, kann dies aber nicht vollständig verhindern, da die zur CO₂-Abtrennung eingesetzte Aminsäuresalzlösung in der Regel nicht als gesättigte Lösungen eingesetzt wird. Insofern steht das erfindungsgemäße Aufreinigungsverfahren in einem Spannungsfeld zwischen vorteilhafter Reinigung der gebildeten Kristalle durch Verdrängung der Mutterlauge durch ein Verdrängungsmedium und gleichzeitig unerwünschter Lösung des zu reinigenden Wertgutes durch das Aufreinigungsmittel, d.h. das Verdrängungsmedium.

Die Anmelderin hat nun unerwartet in Versuchen herausfinden können, dass eine effektive Aufreinigung der Kristalle und ein Einsatz in einem prozesstechnischen Umfeld trotz dieses unerwünschten Lösungsverhaltens des Wertguts möglich ist. Gemäß einer ersten bevorzugten Ausführungsform des erfindungsgemäßen Verfahrens ist vorgesehen, dass nach dem Schritt des Abscheidens der gebildeten Kristalle, die Menge der Mutterlauge in dem Kristallkuchen höchstens 45 Vol.-% und mindestens 10 Vol.-%, insbesondere höchstens 35 Vol.-% und mindestens 10 Vol.-% ist. Aufgrund dieser ausführungsgemäßen Mengen an Mutterlauge liegt zunächst eine unerwünscht hohe Menge an Restfeuchte vor, in welcher weiterhin unerwünschte Verunreinigungen aus der Rauchgaswäsche mit umfasst sind. Um vorteilhaft niedrige Mengen an Mutterlauge zu erreichen, können herkömmliche Filtrierungsverfahren eingesetzt werden. Ausführungsgemäß ist besonders vorteilhaft die Verwendung eines Bandfilters, mittels welchem eine Restfeuchte typischerweise von etwa 10-20 Vol.-% erreicht werden kann. Durch die ausführungsgemäßen Mengen an Mutterlauge eignet sich der Kristallkuchen jedoch vorteilhaft für eine weitere Aufbereitung durch die Verdrängungswäsche mit einem Verdrängungsmedium.

Gemäß einer besonders vorteilhaften Ausführungsform des erfindungsgemäßen Verfahrens ist vorgesehen, dass das Verdrängungsmedium Wasser oder eine Mischung von Wasser und Aminosäuresalz ist, insbesondere eine Mischung, welche zwischen 25 Gew.-% bis 100 Gew.-% Wasser aufweist.

Gemäß einer weiteren, besonders vorteilhaften Ausführungsform des erfindungsgemäßen Verfahrens ist vorgesehen, dass nach dem Schritt des Verdrängens der Mutterlauge durch ein Verdrängungsmedium die Menge des Verdrängungsmediums höchstens 15 Vol.-%, insbesondere höchstens 10 Vol.-% des Kristallkuchens aufweist. Der Kristallkuchen entspricht hierbei einer Mischung von gebildeten Kristallen, Verdrängungsmedium und noch nicht verdrängter Mutterlauge. Aufgrund der im Vergleich zum vorhergehenden Schritt verminderten Menge an Mutterlauge in dem Kristallkuchen wird eine geeignete Verminderung an Nebenprodukten aus der Rauchgasreinigung erreicht. Folglich kann eine Aufreinigung der Aminosäuresalzwaschlösung bei höherer Reinheit erreicht werden.

Entsprechend eines weiteren vorteilhaften Aspekts des erfindungsgemäßen Verfahrens ist vorgesehen, dass der Schritt des Behandelns des Kristallkuchens mit dem Verdrängungsmedium durch ein Aufbringen des Verdrängungsmediums auf eine Oberfläche des Kristallkuchens erfolgt, insbesondere durch ein Berieseln und/oder Besprühen mit dem Verdrängungsmedium. Um eine vorteilhafte Verdrängung der Mutterlauge aus dem Kristallkuchen zu erreichen, wird das Verdrängungsmedium auf den Kristallkuchen aufgebracht. Hierbei ist zu berücksichtigen, dass die Aufbringung des Verdrängungsmediums die Oberfläche des Kristallkuchens mitunter auch zerstören kann, wodurch die Bildung von unerwünschten Durchbrüchen begünstigt wird. Derartige Durchbrüche sind als fluidtechnische Durchbrüche zu verstehen, welche als wenigstens ein Kanal ausgebildet sind, der sich durch den Kristallkuchen hindurch erstreckt. Aufgrund einer derartigen Durchbruchbildung kann mitunter keine gleichmäßige Verdrängung der Mutterlauge über alle Volumenbereiche erreicht werden, wodurch eine nurmehr ungenügende Aufreinigung der gebildeten Kristalle die Folge wäre.

Um die Verdrängung der Mutterlauge ausreichend gleichmäßig und durchbruchsarm bzw. durchbruchsfrei zu gestalten, wird das Verdrängungsmedium auf die Oberfläche des Kristallkuchens bevorzugt als kleine Tropfen aufgebracht. Die mittlere Tropfengröße ist hierbei nicht größer als 2 mm, bevorzugt sogar geringer als 1 mm. Dadurch kann verhindert werden, dass bei Auftreffen der Tropfen auf die Oberfläche des Kristallkuchens eine mechanische Beschädigung und eine Durchbruchbildung die Folge ist. Zudem erlaubt eine Berieselung bzw. Besprühung der Oberfläche eine zeitlich wie auch örtlich im Wesentlichen gleichmäßige Auftragung von Wasser, d.h. während einer bestimmten Zeitspanne werden über alle Flächenbereiche der Oberflächen im Wesentlichen gleiche Mengen an Wasser aufgebracht, wodurch eine weitgehend gleichmäßige Aufreinigung der Kristalle die Folge ist.

Gemäß einer weiteren bevorzugten Ausführungsform des erfindungsgemäßen Verfahrens ist vorgesehen, dass der Schritt des Behandelns des Kristallkuchens mit dem Verdrängungsmedium derart erfolgt, dass kein Durchbruch des Verdrängungsmediums durch den Kristallkuchen erfolgt. Wie vorab bereits ausgeführt, führt nämlich die Ausbildung eines Durchbruchs lediglich zu einer örtlich selektiven Reinigung des Kristallkuchens, weshalb der durchschnittliche Gesamtaufreinigungsgrad über alle Volumenbereiche geringer ausfällt. Darüber hinaus wird so auch unerwünscht gelöster Wertstoff mit ausgetragen, wodurch die Effizienz und Kapazität des Verfahrens vermindert wird.

Entsprechend einer anderen bevorzugten Ausführungsform ist vorgesehen, dass während dem Schritt des Behandelns des Kristallkuchens mit dem Verdrängungsmedium mechanische Kräfte, insbesondere zeitlich sich ändernde Kräfte auf den Kristallkuchen einwirken, die insbesondere keine globale Durchmischung der Kristalle des Kristallkuchens bewirken. Bevorzugt können derartige mechanische Kräfte als Druckkräfte ausgebildet sein, etwa einer Filterpresse. Insbesondere eignen sich hierbei Druck ausübende Vorrichtungen, jedoch auch Unterdruck ausübende Vorrichtungen, durch welche etwa die Mutterlauge aus dem Kristallkuchen abgesogen bzw. herausgedrückt wird. Um einen ausreichend schnellen Abfluss der Mutterlauge zu gewährleisten, ist hierbei ein Druckunterschied von etwa 0,5 bis 2 bar vorteilhaft. Eine geeignete Druckausübung kann etwa mit einer Bandpresse erfolgen. Ebenso ist es möglich, den Kristallkuchen durch zeitlich variierende Kräfte zu beaufschlagen, um ein Abfließen der Mutterlauge zu begünstigen. Insbesondere ist hierbei die Beaufschlagung der Mischung mit Vibrationen zu nennen. Allen Formen der mechanischen Kräftebeaufschlagung ist jedoch gemeinsam, dass im Wesentlichen die Fernordnung der Kristalle erhalten bleibt, sich jedoch die Nahordnung bereichsweise ändern kann. Die Dimensionen der Nah- und Fernordnung ergeben sich aus den prozesstechnischen Dimensionen und betragen typischerweise Millimeter für die Nahordnung wie Zentimeter bis Dezimeter für die Fernordnung.

Gemäß einer weiteren bevorzugten Ausführungsform des erfindungsgemäßen Verfahrens ist vorgesehen, dass vor oder während dem Schritt des Behandelns des Kristallkuchens mit dem Verdrängungsmedium thermische Energie aus dem Kristallkuchen abgeführt wird und eine Temperaturänderung erfolgt, wobei vor der Behandlung mit dem Verdrängungsmedium das Temperaturniveau insbesondere um mindestens 5°C, bevorzugt um mindestens 10°C höher liegt. Die ausführungsgemäße Abführung von thermischer Energie kann etwa durch eine gezielte Aufbringung von Verdunstungskälte einer Berieselungs- bzw. Besprühungsanlage erfolgen. So ist es etwa denkbar, dass die bei oberflächlicher Aufbringung des Verdrängungsmedium erzeugte Verdunstungskälte in einer solchen Berieselungsanlage bzw. Sprühanlage dem Kristallkuchen soviel thermische Energie entzieht, dass eine ausführungsgemäße Abkühlung erfolgt. Durch die Abkühlung verringert sich das Lösungsverhalten der beteiligten Kristalle im Verdrängungsmedium, wodurch das zur Verdrängung der Mutterlauge aufgebrachte Verdrängungsmedium anteilsmäßig weniger Wertgut löst und damit die Menge des Wertgutes in dem Kristallkuchen verhältnismäßig vergrößert. Folglich wird die Ausbeute der Verdrängungswäsche erhöht.

Entsprechend einer weiteren Ausführungsform des erfindungsgemäßen Verfahrens ist vorgesehen, dass nach dem Schritt des Verdrängens der Mutterlauge durch Behandeln des Kristallkuchens mit dem Verdrängungsmedium ein Schritt des Abführens des aufgereinigten Kristallkuchens vorgesehen ist. Der aufgereinigte Kristallkuchen wurde im Vergleich zum noch nicht behandelten Kristallkuchen mit Verdrängungsmedium zur Aufreinigung behandelt (Beide Formen des Kristallkuchens sollen im Rahmen dieser Erfindung begrifflich nicht weiter unterschieden werden, da aus dem jeweiligen Zusammenhang für einen Fachmann hervor geht welche Art des Kristallkuchens betroffen ist). Neben dem Verdrängungsmedium können auch Reste von Mutterlauge in dem aufgereinigten Kristallkuchen mit umfasst sein. Das ausführungsgemäße Abführen des aufgereinigten Kristallkuchens beinhaltet insbesondere auch eine Überführung in weitere Anlagenabschnitte zur weiteren Verarbeitung der Kristalle. Insbesondere erfolgt die Überführung zu einem Lösungsreaktor, in welchem der aufgereinigte Kristallkuchen mit Wasser erneut zur Lösung gebracht wird.

Gemäß einer besonders bevorzugten Ausführungsform der Erfindung ist vorgesehen, dass nach dem Schritt des Verdrängens der Mutterlauge durch Behandeln des Kristallkuchens mit dem Verdrängungsmedium ein Schritt des Zuführens von thermischer Energie und zusätzlichem Wasser vorgesehen ist, derart, dass sich wenigstens die Aminosäuresalzkristalle des Kristallkuchens wiederum auflösen. Die so aufgelösten Aminosäuresalzkristalle stehen erneut als gelöste, effektive Waschsubstanz, d.h. aufgereinigte Waschlösung für die Rauchgasreinigung zur Verfügung.

Gemäß einer besonders bevorzugten Ausführungsform des erfindungsgemäßen Verfahrens ist vorgesehen, dass die einzelnen Verfahrensschritte im Wesentlichen kontinuierlich ausgeführt werden. Hierbei werden die Verfahrensschritte also gleichzeitig angewandt. Die kontinuierliche Ausführung gewährleistet insbesondere eine bevorzugte Anwendungsfähigkeit in einem anlagentechnischen, insbesondere in einem kraftwerkstechnischen bzw. prozesstechnischen Bereich. Insbesondere ist es möglich, eine kontinuierliche Reinigung eines Rauchgases von CO₂ mittels einer Waschlösung zu erreichen, wobei die Waschlösung durchgehend aufgereinigt werden kann.

Gemäß einer weiteren bevorzugten Ausführungsform des erfindungsgemäßen Verfahrens ist vorgesehen, dass die einzelnen Verfahrensschritte unmittelbar nacheinander ausgeführt werden. Eine unmittelbare Ausführung nacheinander gewährleistet eine rasche und effiziente Verfahrensführung.

Nachfolgend wird die Erfindung anhand von einzelnen in Figuren bzw. Flussdiagrammen dargestellten Ausführungsformen erläutert. Hierbei soll darauf hingewiesen werden, dass die Figuren lediglich schematisch zu verstehen sind, und keine Einschränkung hinsichtlich der konkreten Ausführbarkeit darstellen.

Weiterhin soll darauf hingewiesen werden, dass die einzelnen technischen Merkmale bzw. Verfahrensschritte einzeln für sich, wie auch in Gesamtsicht, wie auch in beliebiger Kombination mit anderen technischen Merkmalen bzw. Verfahrensschritten beansprucht werden.

Hierbei zeigen:
- Figur 1: eine erste Ausführungsform des erfindungsgemäßen Verfahrens zur anlagentechnischen Aufbereitung einer mit Rauchgas verunreinigten Aminosäuresalzlösung als Waschlösung in flussdiagrammatischer Darstellung;
- Figur 2: eine Ausführungsform der erfindungsgemäßen technischen Anlage zur Aufbereitung einer mit Rauchgas aus einer Verbrennung verunreinigten wässrigen Aminosäuresalzlösung als Waschlösung in schematischer Darstellung.

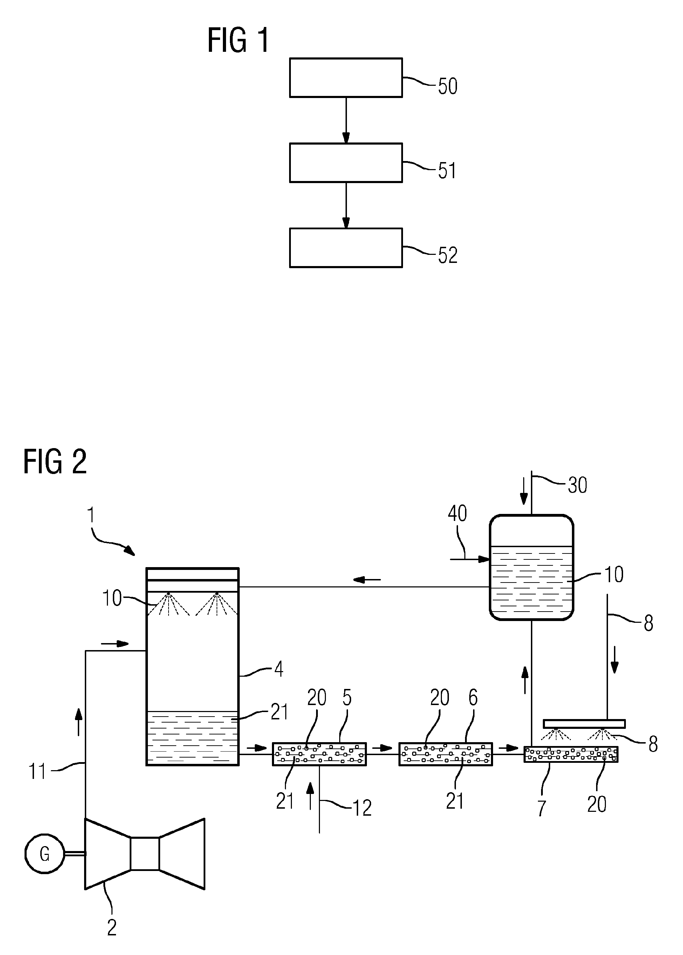

Figur 1 zeigt eine erste Ausführungsform des erfindungsgemäßen Verfahrens zur anlagentechnischen Aufbereitung einer mit Rauchgas verunreinigten Aminosäuresalzlösung als Waschlösung in einer flussdiagrammatischen Darstellung. Die Ausführungsform umfasst hierbei die folgenden einander nachfolgenden Verfahrensschritte:
- Einleiten von CO₂ 11 in eine wässrige Aminosäuresalzlösung als Waschlösung 10 und Ausfällen von Aminosäure, Hydrogencarbonate und/oder Aminosäurecarbamate aus der Lösung (erster Verfahrensschritt 50);
- Abscheiden von gebildeten Kristallen 20 derart, dass ein Kristallkuchen 20 mit verbleibenden Resten an Mutterlauge 21 vorliegt (zweiter Verfahrensschritt 51);
- Verdrängen von verbleibender Mutterlauge 21 durch Behandeln des Kristallkuchens mit einem geeigneten Verdrängungsmedium 30 (dritter Verfahrensschritt 52).

(Die Bezugszeichen wurden hierbei insoweit angegeben, um einen Vergleich mit der nachfolgenden Ausführungsform der technischen Anlage 1 vornehmen zu können. Eine Einschränkung auf diese Ausführungsform ist damit jedoch nicht beabsichtigt.)

Figur 2 zeigt eine Ausführungsform der erfindungsgemäßen technischen Anlage 1 zur Aufbereitung einer mit Rauchgas 11 aus einer Verbrennung verunreinigten wässrigen Aminosäuresalzlösung als Waschlösung 10, wobei die technische Anlage 1 als Verbrennungseinrichtung 2 eine nicht weiter mit Bezugszeichen versehene Gasturbine aufweist. Bei Betrieb dieser Verbrennungseinrichtung 2 wird Rauchgas 11 erzeugt, welches in einem Reaktor 4 mittels einer Waschlösung 10 insbesondere zur Abtrennung von CO₂ behandelt wird. Hierbei wird in dem Reaktor 4 bspw. das eingeleitete Rauchgas 11 mit der Waschlösung 10 besprüht, wobei sich die Waschlösung 10 nach Aufnahme des CO₂ aus dem Rauchgas 11 am Fuß des Reaktors 4 absetzt.

Die Waschlösung 10 ist etwa eine wässrige Lösung einer Aminosäure, deren pH-Wert durch geeignete Zugabe etwa von Kaliumhydroxid auf einen Wert von 10 bis 13 eingestellt wurde.

Zur Aufbereitung der mit CO₂ 12 beladenen Waschlösung 10 wird diese einer Aufbereitungseinheit 5 zugeführt, in welcher die beladene Waschlösung 10 weiter mit CO₂ 12 versetzt wird, um den pH-Wert der Mischung zu erniedrigen. Das CO₂ 12 kann hierbei bspw. aus der Postcombustion-Abtrennung entnommen werden. Aufgrund der Lösung von CO₂ 12 fallen Aminosäuren, Hydrogencarbonat und/oder Aminosäurecarbamat 20 aus. Gemäß einer besonderen Ausführungsform der Erfindung kann die Aufbereitungseinheit 5 mit dem Reaktor 4 auch identisch sein.

Weiter umfasst die technische Anlage 1 eine Abscheidungseinheit 6, in welcher die ausgefällte Aminosäure und Hydrogencarbonat und/oder Aminosäurecarbamat 20 selektiv abgeschieden werden können. Die Abscheidungseinheit 6 und die Aufbereitungseinheit 5 können auch identisch sein. Nach erfolgter Abscheidung, welche bspw. durch einen Filtrationsprozess erreicht wird, liegt ein Kristallkuchen vor, in dem ein Teil der Mutterlauge verbleit, wobei die Mutterlauge im Kristallkuchen etwa 20 Vol.-% einnimmt. Den Kristallkuchen von der anhaftenden Mutterlauge 21 zu befreien, ist vorgesehen, in einer Verdrängungseinrichtung 7 durch eine Behandlung des Kristallkuchens mit einem geeigneten Verdrängungsmedium 8 die Mutterlauge 21 aus dem Kristallkuchen zu verdrängen. Hierzu wird insbesondere als Verdrängungsmedium 8 Wasser 30 vorgesehen, welches oberflächlich auf den Kristallkuchen aufgesprüht wird, wobei die Mutterlauge 21 aus dem Kristallkuchen entweicht. Die so entweichende Mutterlauge 21 kann bspw. einer Verwerfung zugeführt werden.

Nach erfolgter Aufreinigung durch Verdrängung mit dem Verdrängungsmedium 8 kann der aufgereinigte Kristallkuchen in einem Lösungsreaktor etwa mit Wasser 30 zur Lösung gebracht werden, wodurch erneut Waschlösung 10 erzeugt wird, die dem CO₂-Abtrennprozess zur Rauchgaswäsche zugeführt werden kann. Um die Lösung des Kristallkuchens in dem Lösungsreaktor zu beschleunigen, kann dem Lösungsreaktor Wärme 40 zugeführt werden.

Weitere Ausführungsformen ergeben sich aus den Unteransprüchen.

## Patentansprüche

1. Verfahren zur anlagentechnischen Aufbereitung einer durch Rauchgasbestandteile (11) verunreinigten Aminosäuresalzlösung als Waschlösung (10), umfassend die folgenden einander nachfolgenden Verfahrensschritte:
- Einleiten von CO₂ (12) in eine wässrige Aminosäuresalzlösung (10) und Ausfällen von Aminosäure und Hydrogencarbonat oder Aminosäurecarbamat (20) aus der Lösung;
- Abscheiden von gebildeten Kristallen (20) derart, dass ein Kristallkuchen (20) mit verbleibenden Resten an Mutterlauge (21) vorliegt;
- Verdrängen von verbleibender Mutterlauge (21) durch Behandeln des Kristallkuchens (21) mit einem geeigneten Verdrängungsmedium (30);

2. Verfahren nach Anspruch 1,
**dadurch gekennzeichnet, dass** nach dem Schritt des Abscheidens der gebildeten Kristalle, die Menge der Mutterlauge in dem Kristallkuchen höchstens 45 Vol.-% und mindestens 10 Vol.-%, insbesondere höchstens 35 Vol.-% und mindestens 10 Vol.-% ist.

3. Verfahren nach einem der vorhergehenden Ansprüche,
**dadurch gekennzeichnet, dass** nach dem Schritt des Verdrängens der Mutterlauge (21) durch ein Verdrängungsmedium (30), die Menge des Verdrängungsmediums (30) höchstens 15 Vol.-%, insbesondere höchstens 10 Vol.-% des Kristallkuchens aufweist.

4. Verfahren nach einem der vorhergehenden Ansprüche,
**dadurch gekennzeichnet, dass** das Verdrängungsmedium Wasser oder eine Mischung von Wasser und Aminosäuresalz ist, insbesondere eine Mischung, welche zwischen 25 Gew.-% bis 100 Gew.-% Wasser aufweist.

5. Verfahren nach einem der vorhergehenden Ansprüche,
**dadurch gekennzeichnet, dass** der Schritt des Behandelns des Kristallkuchens mit dem Verdrängungsmedium durch ein Aufbringen des Verdrängungsmediums auf eine Oberfläche des Kristallkuchens erfolgt, insbesondere durch ein Berieseln und/oder Besprühen mit dem Verdrängungsmedium (30).

6. Verfahren nach einem der vorhergehenden Ansprüche,
**dadurch gekennzeichnet, dass** der Schritt des Behandelns des Kristallkuchens mit dem Verdrängungsmedium derart erfolgt, dass kein Durchbruch des Verdrängungsmediums durch den Kristallkuchen erfolgt.

7. Verfahren nach einem der vorhergehenden Ansprüche,
**dadurch gekennzeichnet, dass** während dem Schritt des Behandelns des Kristallkuchens mit dem Verdrängungsmedium (30) mechanische Kräfte, insbesondere zeitlich sich ändernde Kräfte auf den Kristallkuchen einwirken, die insbesondere keine globale Durchmischung der Kristalle des Kristallkuchens bewirken.

8. Verfahren nach einem der vorhergehenden Ansprüche,
**dadurch gekennzeichnet, dass** vor oder während dem Schritt des Behandelns des Kristallkuchens mit dem Verdrängungsmedium (30) thermische Energie aus dem Kristallkuchen abgeführt wird und eine Temperaturänderung erfolgt, wobei vor der Behandlung mit dem Verdrängungsmedium (30) das Temperaturniveau insbesondere um mindestens 5 °C, bevorzugt um mindestens 10 °C höher liegt.

9. Verfahren nach einem der vorhergehenden Ansprüche,
**dadurch gekennzeichnet, dass** nach dem Schritt des Verdrängens der Mutterlauge (21) durch Behandeln des Kristallkuchens mit dem Verdrängungsmedium (30) ein Schritt des Abführens des aufgereinigten Kristallkuchens (20) vorgesehen ist.

10. Verfahren nach einem der vorhergehenden Ansprüche,
**dadurch gekennzeichnet, dass** nach dem Schritt des Verdrängens der Mutterlauge (21) durch Behandeln des Kristallkuchens mit dem Verdrängungsmedium (30) ein Schritt des Zuführens von thermischer Energie und zusätzlichem Wasser (30) vorgesehen ist, derart, dass sich wenigstens die Aminosäuresalzkristalle des Kristallkuchens wiederum auflösen.

11. Verfahren nach einem der vorhergehenden Ansprüche,
**dadurch gekennzeichnet, dass** die einzelnen Verfahrensschritte im Wesentlichen kontinuierlich ausgeführt werden.

12. Verfahren nach einem der vorhergehenden Ansprüche,
**dadurch gekennzeichnet, dass** die einzelnen Verfahrensschritte unmittelbar nacheinander ausgeführt werden.

13. Technische Anlage (1) zur Aufbereitung einer mit Rauchgas (11) aus einer Verbrennung verunreinigten wässrigen Aminosäuresalzlösung als Waschlösung (10), umfassend folgende Bauteile:
- eine Aufbereitungseinheit (5), in welcher CO₂ (12) zu einer wenigstens ein Aminosäuresalz in gelöster Form enthaltenden wässrigen Waschlösung (10) zugegeben werden kann, wobei Aminosäure, Hydrogencarbonat und/oder Aminosäurecarbamat (20) ausfallen können;
- eine Abscheidungseinheit (6) zum Abscheiden von gebildeten Kristalle (20), wobei die Kristalle in einer verbleibenden Mutterlauge als Kristallkuchen vorliegen;
- Verdrängungseinrichtung (7) zum Verdrängen verbleibender Mutterlauge (21) aus dem gewonnen Kristallkuchen durch Behandeln des Kristallkuchens mit einem geeigneten Verdrängungsmedium (30).
